# EUROPEAN PATENT SPECIFICATION

(11) **EP 0 594 844 B1**
(45) Date of publication and mention of the grant of the patent: **15.07.1998**
(21) Application number: 93913954.9
(22) Date of filing: 12.05.1993
(51) Int. Cl.: G01N 27/72, G01N 27/82

(54) **MAGNETIC INSPECTION PROBE FOR DETECTING FLAWS IN FERROMAGNETIC GOODS**
MAGNETISCHES RISSPRÜFGERÄT FÜR FERROMAGNETISCHE GEGENSTÄNDE
DETECTEUR MAGNETIQUE DE DEFAUTS DANS DES OBJETS FERROMAGNETIQUES

(30) Priority: 14.05.1992 US 882810
(43) Date of publication of application: 04.05.1994
(73) Proprietor: WESTERN ATLAS INTERNATIONAL, INC., Houston, TX 77042-3115 (US)
(72) Inventor: HWANG, Jackson, H., Houston, TX 77025 (US)
(74) Representative: Godsill, John Kenneth
(86) International application number: PCT/US93/04695
(87) International publication number: WO 93/23749

(56) References cited:
- WO-A-90/11515
- FR-A- 2 345 721
- FR-A- 2 627 288
- US-A- 3 091 733
- US-A- 4 789 827

## Description

The present invention relates to magnetic inspection probes for detecting flaws in ferromagnetic goods.

Flaws in ferromagnetic material and in particular, in tubular goods, such as, for example, pipes and well casing, are commonly detected by establishing a magnetic field in the wall thereof. For simplicity, the term "pipe" will be deemed to include all forms of tubular goods, including structural shapes having an infinite radius of curvature. Distortion of the magnetic field caused by pits, corrosion and changes in the structure of the specimen such as might be caused by couplings, welds or collars, may be found by eddy-current and flux leakage detectors. Hall effect devices may be used to detect changes in the wall thickness.

Typically, a magnetic inspection probe comprises an elongate magnet that has enlarged pole pieces on each end. The pole pieces are separated from the inner pipe wall by a small clearance. The magnet may be a DC-energized electromagnet or it may be a permanent magnet. The respective sensors may be radially arranged around the magnet core, in close contact with the inner pipe surface or they may be supported on flexibly-mounted shoes that are pressed against the interior wall. As the probe is drawn past a pipe defect, changes in the magnetic flux pattern induce a corresponding transient voltage in the sensors. The transient voltage may be recorded on an oscillograph or other recording medium as a voltage level plotted as a function of linear position of the probe along the specimen.

A number of magnetic inspection probes are known.

For example, US 4,789,827 discloses a magnetic inspection probe that includes first and second flux leakage sensing coils mounted within the probe housing. Sensing coils, radially offset with respect to each other, provide a measure of the flux leakage to detect flaws in the pipe under inspection. A Hall effect device senses variations of the pipe thickness.

US 4,088,946 discloses a magnetic inspection probe that uses a central magnetizer and a Hall effect sensor. Means are provided for nulling out the magnetic field of the main magnetizer so that the Hall effect device will be more sensitive to small flux changes due to pits and corrosion in the piping.

US 4,447,777 discloses a pipeline inspection vehicle which includes a central magnetizer having pole pieces that consist of ferromagnetic wire-brush segments to close the magnetic circuit through the pipe. The brushes rub against the interior pipe wall and also serve as centralizers for the probe. The flux sensor coils are carried on a plurality of shoes, distributed radially around the tool. The sensor shoes are spring-loaded so as to press against the inner pipe wall.

Further magnetic inspection probes are known from US 3,091,733, WO 90/11515 and US Reissue 31109.

A DC magnetic inspection device for use in cased boreholes is described in a paper presented to the Society of Petroleum Engineers, May 1991, entitled *Full Signature Multiple-Channel Vertilog,* by G.W. Adams et al. This device employs a poled electromagnet and associated sensor coils for detecting flux leakage and eddy currents caused by pipe defects. The data gathering system of this tool employs a digital technology.

The design of a magnetic inspection probe requires that the cross-sectional areas of the pole pieces be larger than the cross-sectional area of the tubing. If this condition is not satisfied, the pipe will be magnetically undersaturated. Ideally, the entire magnetic field would be confined to a closed circuit, through the pipe wall, between the pole pieces. In actual fact, there are significant losses in field strength due to open-ended stray fields emanating outwardly from the ends of the magnet. For that reason, the magnetizer element must be relatively large volumetrically to provide a sufficiently strong magnetic field for useful inspection purposes.

In relatively large pipes, exceeding ten or twelve-and-a-half centimetres (four or five inches) in diameter, there is adequate space inside the pipe to accommodate a magnetizer having the required physical size. For small tubing on the order of 6 to 8.75 cm (2.375" to 3.5") there is simply not enough room for a magnetizer of the necessary cross-sectional area. There is a need therefor for a magnetic flaw detector that can be used in small diameter tubing as well as in tubing or large diameters.

According to the invention there is provided a magnetic inspection probe for detecting flaws in ferromagnetic goods, the probe comprising a first magnetizer having poles of opposite polarity for establishing a magnetic field in a wall of a specimen under study and sensor means for detecting magnetic changes to detect defects present in such a wall, characterised by a second magnetizer having poles of opposite polarity for confining said magnetic field established by the first magnetizer within a volumetric region within such a wall, the first magnetizer being positioned between the poles of the second magnetizer, like poles of the first and second magnetizers being juxtapositioned, and the sensor means being arranged so as to be able to detect and discriminate between flaws on the inner surface and flaws on the outer surface of a wall of a specimen under study.

It is thus possible in embodiments of the invention to provide a probe in which the second magnetizer provides a magnetic field that confines the magnetic field established by the first magnetizer to a desired volumetric region in a wall of a specimen under study, thereby to increase the magnetic flux density within that region. A flux leakage sensor can then detect defects in the material of a specimen via the distortions in the magnetic field that such defects give rise to.

In a preferred embodiment, the physical size of the magnetic inspection probe can be substantially reduced, making the device practical for use in small-diameter tubing.

In another preferred embodiment, the sensor means includes means for measuring flux leakage from said wall and means for measuring the reluctance of said magnetic field. It is then possible to detect defects in the material by the variations in the reluctance of the first magnetic field that such defects give rise to, the sensor means including the flux measuring means.

In an embodiment suitable for use in ferromagnetic tubular goods having a small radius of curvature, there is provided a magnetic inspection probe comprising a shoe in which is mounted the first magnetizer, the flux leakage measuring means and the reluctance measuring means, the shoe being flexibly supported from the second magnetizer between the pole pieces thereof, resilient means being provided for pressing the shoe against the inside of a wall of a specimen under study, the flux leakage measuring means and the reluctance measuring means being adapted to output signals from which signals flaws on the outside of such a wall can be distinguished from flaws on the inside of such a wall.

In another embodiment there is provided a magnetic inspection probe wherein the second magnetizer comprises an elongate permanently magnetized core that is terminated at both ends by respective vented ferromagnetic prehensile pole pieces, there being provided a plurality of radially disposed shoes that are flexibly supported around the core of the second magnetizer between the prehensile pole pieces, each shoe including a magnetic element, a flux leakage sensor and a reluctance sensor, the magnetic elements, flux leakage sensors and reluctance sensors forming collectively the first magnetizer, the flux leakage measuring means and the reluctance measuring means respectively.

For a better understanding of the invention, and to show how the same may be carried into effect, reference will now be made, by way of example, to the accompanying drawings, in which:-
Figure 1 represents the flux pattern of a conventional magnetic inspection probe as applied to tubular goods;
Figure 2 is a schematic diagram showing an embodiment of the invention;
Figure 3 shows a pipe specimen having internal and external defects;
Figure 4 shows the signals received from the flux leakage sensor and the variable reluctance sensor in response to scanning the pipe specimen of Figure 3;
Figure 5 is a cross-section along the length of a magnetic inspection probe according to an embodiment of the invention;
Figure 6 is an isometric view of one shoe of the probe of Figure 5;
Figure 7 is a cross-section along line 7-7 of Figure 5; and
Figure 8 is a schematic diagram of the sensor electronics.

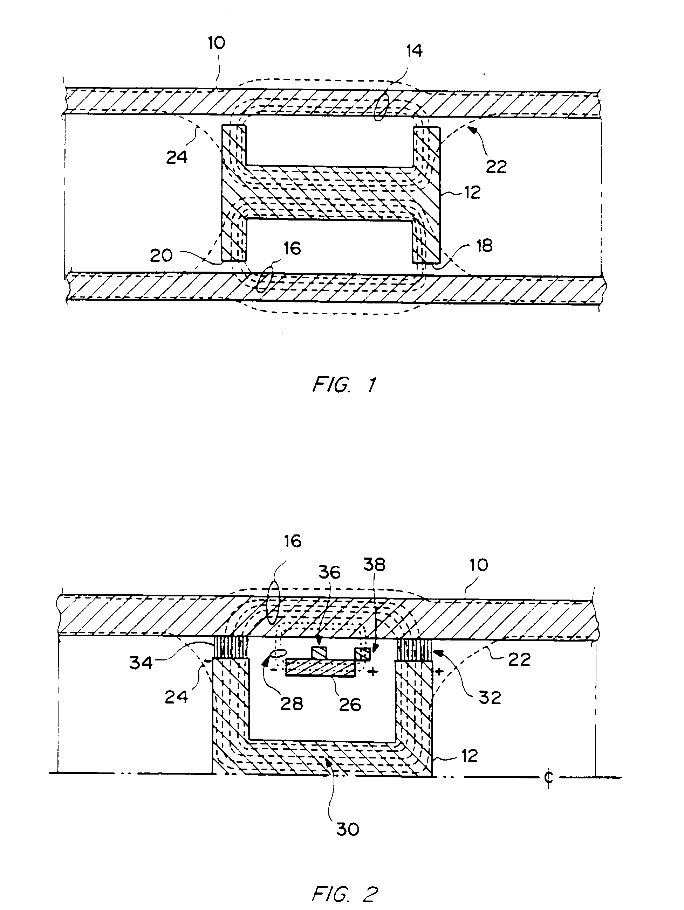

In Figure 1, there is shown a pipe specimen 10 in which is positioned a cylindrical magnetizer element 12 that may be a permanent magnet. The magnetic lines of force, shown by the sets of dashed lines 14 and 16, form a magnetic circuit through the body of the magnetizer 12, out from the pole pieces 18 and 20, which have opposite polarity, and through the wall of the specimen 10. Ideally, the entire magnetic field would form a closed circuit through the wall of the specimen between the pole pieces 18 and 20. But stray fields of considerable magnitude such as 22 and 24 emanate from the ends of the magnetizer outwardly, thereby substantially attenuating the useful flux density between the poles. The areas of the pole faces of the magnetizer must be made quite large to make up for the flux density loss due to stray fields. As pointed out earlier, in tubular goods having small diameter (defined as a diameter less than 11.25 cm, i.e. 4.5"), lack of space limits the physical size of a magnetic inspection probe.

In Figure 2, a dual magnetizer configuration is shown. A first magnetizer 26, which preferably is a permanent magnet, having poles of opposite polarity, is positioned between the pole pieces of a second magnetizer 12, which also preferably is a permanent magnet. The magnetic flux lines of the first magnetizer are shown as 28 (dotted lines) which form a circuit through the wall 10 between the poles of magnetizer 26. It is to be observed that like poles (+ and -) of the first and second magnetizers are positioned next to each other. The magnetic flux lines 30 (dashed lines) of the second magnetizer 12 form a circuit through prehensile pole pieces 32 and 34 and the pipe wall 10. Since the magnetic fields 28 and 30 are of the same polarity, the magnetic field due to second magnetizer 12, being stronger, repels the magnetic field due to first magnetizer 26 and effectively confines that field to a desired volumetric region of the wall 10 of the specimen under study. In effect, the second magnetizer 12 encloses the magnetic field of the first magnetizer 26 in a magnetic bottle. In a preferred arrangement, the field strength of the first magnetizer is 0.2 - 0.3T (2-3 kG) and that of second magnetizer is about 1T (10 kG). By the above stratagem, loss of flux density due to stray fields is eliminated and the use of magnetizers of smaller physical size and diameter becomes possible. Since permanent magnets are used, the bulky coils needed for an electromagnet are absent.

As is well-known, in a defect-free specimen the magnetic field resident therein is uniform. By contrast, around a pit or defect, the field is disturbed and lines of magnetic flux bulge out of the specimen wall to form a magnetic pimple in the otherwise uniform field. The rate of change of the leakage flux-density along the axis of the specimen is related to the loss or gain of the metal within the region of the disturbance. A sensor coil passing the disturbed region will develop an output voltage of a magnitude that reflects the rate of change of the leakage flux-density vector.

Associated with first magnetizer 26 are a flux leakage sensor 36 and a variable reluctance sensor 38. The flux leakage sensor 36 may be an elongate wire coil arranged orthogonally to the axis of the first magnetizer 26. As explained above, an electrical voltage is induced in the coil when the magnetic inspection probe, including the coil, is moved past a defect or pit on either the inside or outside of the specimen.

The variable reluctance sensor 38 is a well-known Hall effect device. It responds to a change in the reluctance of the magnetic circuit such as when the sensor passes over a pit on the interior surface of the specimen. As shown in Figure 2, the flux leakage sensor 36 is mounted over the centre of the first magnetizer 26. The variable reluctance sensor 38 is mounted at the end of the first magnetizer 26 as a part of the magnetic circuit. It senses the change in reluctance due to a change in the length of the gap between sensor and specimen wall 10 in the presence of a pit. Thus, the flux leakage sensor 36 responds to defects on either side of the specimen. The variable reluctance sensor 38 responds only to defect on the side of the specimen facing the probe.

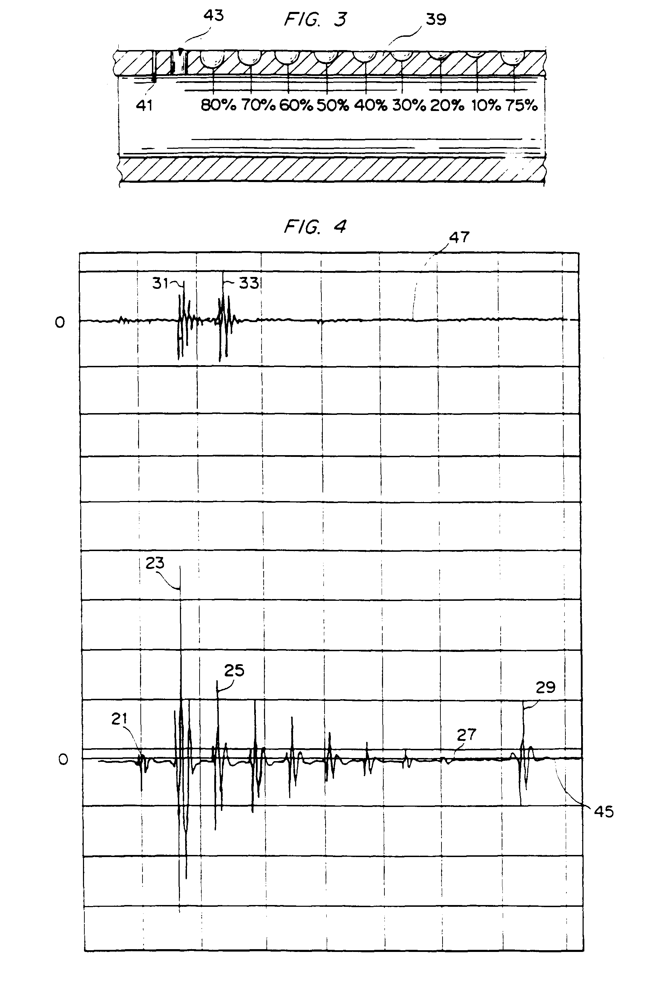

Figure 3 illustrates a test specimen of pipe 39 that has nine exterior pits having depths ranging from 10% to 80% of the wall thickness. Two through-holes 41 and 43 of different sizes represent internal defects.

Figure 4 shows the response of the flux leakage detector (lower trace 45) to all of the defects as a function of output voltage along the Y-axis versus defect location along the X-axis. The output voltage varies as a function of the pit depth and diameter. The small hole 41 gives rise to a low-level transient 21. The large hole 43 with a pit depth of 100% of the wall thickness produces a very large transient 23. The transient 25 due to the 80% pit is somewhat lower in voltage level. The transient 27 due to the 20% pit is very small, while the transient due to the 10% pit is nearly undetected. The transient 29 due to the 75% pit is nearly as large as the transient 25 due to the 80% pit.

The upper trace 47 is the response of the variable reluctance sensor 38 to the respective defects, noting however that the recording pen was shifted to the right relative to the lower trace 45. The upper trace 47 shows a strong response to the two internal defects 41 and 43 with transients 31 and 33, but is otherwise featureless. Magnetic inspection probes embodying the invention can therefore provide means for detecting and discriminating between internal and external flaws in the wall of tubular goods.

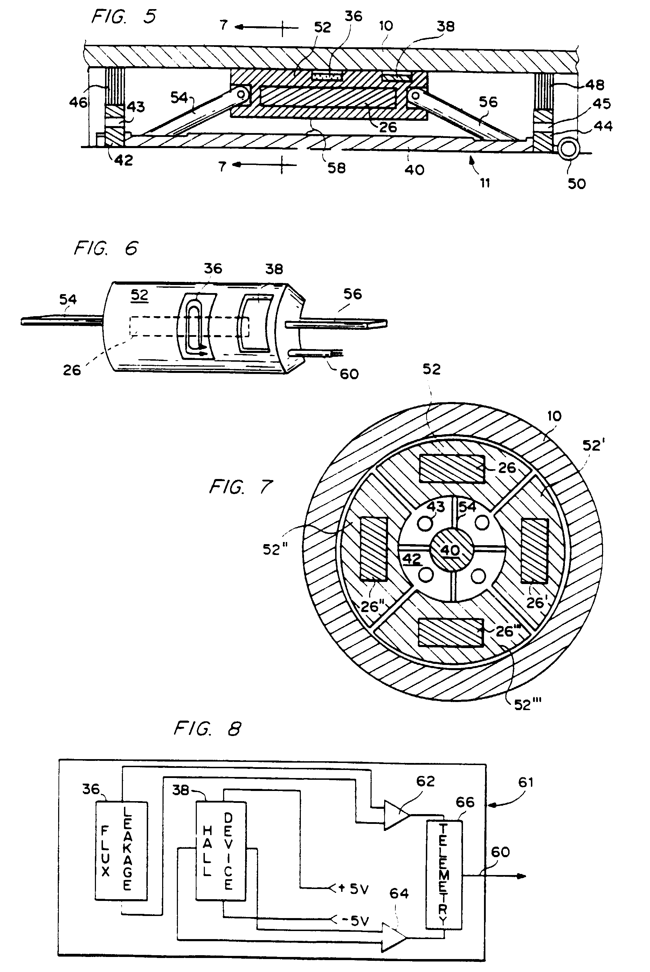

Figures 5-8 show the arrangement of the principal components of a preferred embodiment of the invention and a mode of operation thereof. Figure 5 is a cross-section along the axis of a pipe 10 in which a magnetic inspection probe, generally shown as 11, is positioned. For simplicity, only the upper half of the probe is shown. However, it should be recognized that the device is symmetrical about the longitudinal axis.

Magnetic inspection probe 11 comprises a central core 40 that is terminated at each end by pole pieces 42 and 44, all or part of which, such as portions 46 and 48, may be a prehensile material such as magnetic rubber. The prehensile pole pieces may be secured to the central core 40 by any convenient means. Pole pieces 42 and 44 contain vent holes such as 43 and 45 to allow for the passage of the probe through fluids that may remain inside the pipe 10. The core 40 and pole pieces 42 and 44, along with the prehensile portions 46 and 48, comprise the second magnetizer 12. An eye 50 is provided to which a logging cable may be attached for drawing the probe along the interior of pipe 10. The rate of travel along a pipe during inspection is preferably about 0.63 metres per second (125 feet per minute). For meaningful quantitative results, the probe must be drawn along the specimen at a constant velocity because the output voltage level is a function of the rate of change of the flux leakage vector.

A shoe 52 is provided, which may be made of some non-magnetic substance such as K-monel metal. The first magnetizer 26, which may be a bar magnet as shown or may be U-shaped, is mounted within a suitable cavity in shoe 52. A flux leakage sensor coil 36 and a variable reluctance sensor 38 are mounted in cells in the shoe 52. Calliper arms 54 and 56 are provided, one end of each of which is pivoted from each end of the shoe 52. The opposite ends of the calliper arms 54 and 56 are slidingly seated in axial slots milled in the core 40 as shown. One or more springs, such as 58, serve to radially expand the shoe 52 and its sensors 36, 38 against the interior surface of pipe 10. The clearance between the sensors and the interior pipe wall when the probe is in operation is only a few four-hundredths of a centimetre (a few thousandths of an inch).

Figure 6 is an isometric view of the shoe 52 showing the orientation of the elongate flux leakage sensor coil 36 which is aligned orthogonally to the longitudinal axis of pipe 10. The outer contour of the shoe 52 may be curved to match the radius of curvature of the specimen to be inspected. The variable reluctance sensor 38 is shown embedded in a suitable cell. The first magnetizer 26 is shown by dashed lines because it is not visible from the outer surface of the shoe 52. A cable 60, which is not shown in Figure 5, conducts signals from the sensors 36, 38 to the outside world through a suitable logging cable of any well-known type.

Figure 7 is a cross-section along line 7-7 of Figure 5, showing the disposition of four shoes 52, 52', 52 and 52''' around the internal circumference of the pipe 10. At least four instrumented shoes are needed to monitor the full circumference of the pipe. If the areal coverage of the sector defined by each shoe is limited as shown, it may be necessary to provide at least two sets of four shoes each, with the sets being axially staggered with respect to each other to provide full circumferential coverage.

Figure 8 is a schematic diagram of the electronic circuitry 61 for interfacing the output signals of the sensors with a logging cable. The output signals from the flux leakage sensor coil 36 and the variable reluctance sensor 38 are fed to amplifiers 62 and 64 respectively. A potential of about 5V is provided to activate the Hall-effect sensor. The amplifier outputs are coupled to a telemetry module 66 of any desired type where the analogue signals from the sensors are digitized and serially delivered to a serial data output bus 68 for transmission via a logging cable to signal utilization equipment, not shown. Preferably, the electronics module may be housed in the magnetic inspection probe assembly itself in any convenient manner (not shown).

## Claims

1. A magnetic inspection probe for detecting flaws in ferromagnetic goods, the probe comprising a first magnetizer (26) having poles of opposite polarity for establishing a magnetic field in a wall of a specimen (10) under study and sensor means (36, 38) for detecting magnetic changes to detect defects present in such a wall, characterised by a second magnetizer (12) having poles (18, 20) of opposite polarity for confining said magnetic field established by the first magnetizer (26) within a volumetric region within such a wall, the first magnetizer (26) being positioned between the poles (18, 20) of the second magnetizer, like poles of the first and second magnetizers being juxtapositioned, and the sensor means (36, 38) being arranged so as to be able to detect and discriminate between flaws on the inner surface and flaws on the outer surface of a wall of a specimen under study.

2. A probe according to claim 1, wherein the sensor means includes means (36) for measuring flux leakage from a wall of a specimen under study and means (38) for measuring the reluctance of said magnetic field.

3. A probe according to claim 1 or 2, wherein the poles of the second magnetizer (12) include prehensile pole pieces (42, 44) secured thereto.

4. A probe according to claim 1, 2 or 3, wherein the second magnetizer (12) has a central permanently magnetized core (40) that is terminated at its end regions by respective pole pieces (42, 44), there being means (52) for resiliently supporting the first magnetizer (26) from said central core (40) and means (58) for radially expanding said resiliently supporting means against the inner surface of a wall of a specimen under study.

5. A probe according to claim 2 or 5, or to claim 3 or 4 when appended to claim 2, comprising a shoe (52) in which is mounted the first magnetizer (26), the flux leakage measuring means (36) and the reluctance measuring means (38), the shoe (52) being flexibly supported from the second magnetizer (12) between the pole pieces (42, 44) thereof, resilient means (58) being provided for pressing the shoe against the inside of a wall of a specimen under study, the flux leakage measuring means (36) and the reluctance measuring means (38) being adapted to output signals from which signal flaws on the outside of such a wall can be distinguished from flaws on the inside of such a wall.

6. A probe according to claim 2 or 5, or to claim 3 or 4 when appended to claim 2, wherein the second magnetizer (12) comprises an elongate permanently magnetized core (40) that is terminated at both ends by respective vented ferromagnetic prehensile pole pieces (42, 44), there being provided a plurality of radially disposed shoes (52, 52', 52'' and 52''') that are flexibly supported around the core (40) of the second magnetizer (12) between the prehensile pole pieces (42, 44), each shoe including a magnetic element (26, 26', 26'' and 26'''), a flux leakage sensor and a reluctance sensor, the magnetic elements, flux leakage sensors and reluctance sensors forming collectively the first magnetizer (12), the flux leakage measuring means (36) and the reluctance measuring means (38) respectively.

7. A probe according to any one of the preceding claims, wherein the first magnetizer (26) is a permanent magnet.

8. A probe according to any one of the preceding claims, wherein the second magnetizer (12) is a permanent magnet.

9. A probe according to any one of the preceding claims, wherein the sensor means (36, 38) is arranged between the poles (18, 20) of the second magnetizer (12).

10. A probe according to any one of the preceding claims, wherein the magnetic field due to the second magnetizer (12) is stronger than that due to the first magnetizer (26).

## Patentansprüche

1. Magnetischer Untersuchungsfühler zum Erkennen von Fehlstellen in ferromagnetischen Waren, wobei der Fühler umfaßt: eine erste Magnetisiervorrichtung (26), die Pole mit entgegengesetzter Polarität aufweist, um ein Magnetfeld in einer Wand eines untersuchten Prüflings (10) aufzubauen, und eine Sensorvorrichtung (36, 38) zum Erfassen magnetischer Veränderungen, durch die in einer solchen Wand vorhandene Defekte erkannt werden, gekennzeichnet durch eine zweite Magnetisiervorrichtung (12), die Pole (18, 20) mit entgegengesetzter Polarität aufweist, um das Magnetfeld, das die erste Magnetisiervorrichtung (26) erzeugt, in einem Volumenbereich innerhalb einer solchen Wand einzugrenzen, wobei die erste Magnetisiervorrichtung (26) zwischen den Polen (18, 20) der zweiten Magnetisiervorrichtung angeordnet ist und gleiche Pole der ersten und der zweiten Magnetisiervorrichtung nebeneinander liegen, und die Sensorvorrichtung (36, 38) so angeordnet ist, daß sie Fehlstellen auf der Innenfläche und Fehlstellen auf der Außenfläche einer Wand des untersuchten Prüflings erkennen und diese Fehlstellen unterscheiden kann.

2. Fühler nach Anspruch 1, wobei die Sensorvorrichtung eine Einrichtung (36) zum Messen von Streufluß aus einer Wand des untersuchten Prüflings und eine Einrichtung (38) zum Messen der Reluktanz des Magnetfelds enthält.

3. Fühler nach Anspruch 1 oder 2, wobei die Pole der zweiten Magnetisiervorrichtung (12) Eingreifpolstücke (42, 44) enthalten, die daran befestigt sind.

4. Fühler nach Anspruch 1, 2 oder 3, wobei die zweite Magnetisiervorrichtung (12) einen mittigen permanent magnetisierten Kern (40) aufweist, der an seinen Endbereichen jeweils mit Polstücken (42, 44) abgeschlossen ist, und eine Einrichtung (52) zum nachgiebigen Abstützen der ersten Magnetisiervorrichtung (26) gegen den mittigen Kern (40) und eine Einrichtung (58) zum radialen nach außen Drücken der nachgiebigen Stützvorrichtung gegen die Innenfläche einer Wand eines untersuchten Prüflings vorhanden sind.

5. Fühler nach Anspruch 2 oder 5 oder nach Anspruch 3 oder 4 wenn abhängig von Anspruch 2, umfassend einen Schuh (52), in dem die erste Magnetisiervorrichtung (26), die Streufluß-Meßvorrichtung (36) und die Reluktanz-Meßvorrichtung (38) montiert ist, wobei die zweite Magnetisiervorrichtung (12) den Schuh (52) flexibel zwischen ihren Polstücken (42, 44) hält, und eine nachgiebige Einrichtung (58) bereitgestellt ist, die den Schuh gegen die Innenwand eines untersuchten Prüflings drückt, und die Streufluß-Meßvorrichtung (36) und die Reluktanz-Meßvorrichtung (38) dazu eingerichtet sind, Signale auszugeben, aus denen Fehlstellen an der Außenseite einer solchen Wand von Fehlstellen an der Innenseite einer solchen Wand unterschieden werden können.

6. Fühler nach Anspruch 2 oder 5 oder nach Anspruch 3 oder 4 wenn abhängig von Anspruch 2, wobei die zweite Magnetisiervorrichtung (12) einen länglichen permanent magnetisierten Kern (40) umfaßt, der an seinen beiden Enden mit jeweiligen belüfteten ferromagnetischen Eingreifpolstücken (42, 44) abgeschlossen ist, und eine Anzahl radial angeordneter Schuhe (52, 52', 52'' und 52''') bereitgestellt sind, die zwischen den Eingreifpolstücken (42, 44) flexibel um den Kern (40) der zweiten Magnetisiervorrichtung (12) herum aufgenommen sind, und jeder Schuh ein magnetisches Element (26, 26', 26'' und 26'''), einen Streuflußsensor und einen Reluktanzsensor enthält, wobei die magnetischen Elemente, die Streuflußsensoren und die Reluktanzsensoren jeweils gemeinsam die erste Magnetisiervorrichtung (12), die Streufluß-Meßvorrichtung (36) und die Reluktanz-Meßvorrichtung (38) bilden.

7. Fühler nach irgendeinem der vorhergehenden Ansprüche, wobei die erste Magnetisiervorrichtung (26) ein Permanentmagnet ist.

8. Fühler nach irgendeinem der vorhergehenden Ansprüche, wobei die zweite Magnetisiervorrichtung (12) ein Permanentmagnet ist.

9. Fühler nach irgendeinem der vorhergehenden Ansprüche, wobei die Sensorvorrichtung (36, 38) zwischen den Polen (18, 20) der zweiten Magnetisiervorrichtung (12) angeordnet ist.

10. Fühler nach irgendeinem der vorhergehenden Ansprüche, wobei das von der zweiten Magnetisiervorrichtung (12) erzeugte Magnetfeld stärker ist als das Magnetfeld, das die erste Magnetisiervorrichtung (26) erzeugt.

## Revendications

1. Sonde d'inspection magnétique pour la détection de défauts dans des produits ferromagnétiques, la sonde comportant un premier magnétiseur (26) ayant des pôles de polarité opposée destiné à établir un champ magnétique dans une paroi d'un spécimen (10) en cours d'étude et des moyens de détection (36, 38) destinés à détecter des changements magnétiques afin de détecter des défauts présents dans une telle paroi, caractérisée par un deuxième magnétiseur (12) ayant des pôles (18, 20) de polarité opposée destiné à confiner ledit champ magnétique établi par le premier magnétiseur (26) dans une zone volumétrique à l'intérieur d'une telle paroi, le premier magnétiseur (26) étant positionné entre les pôles (18, 20) du deuxième magnétiseur, les pôles identiques des premier et deuxième magnétiseurs étant juxtaposés, et les moyens de détection (36, 38) étant agencés de façon à pouvoir détecter et faire la discrimination entre des défauts sur la surface interne et des défauts sur la surface externe d'une paroi d'un spécimen en cours d'étude.

2. Sonde selon la revendication 1, dans laquelle les moyens de détection comprennent des moyens (36) destinés à mesurer une fuite de flux depuis une paroi d'un spécimen en cours d'étude et des moyens (38) destinés à mesurer la réluctance dudit champ magnétique.

3. Sonde selon la revendication 1 ou 2, dans laquelle les pôles du deuxième magnétiseur (12) comprennent des pièces polaires de préhension (42, 44) fixées dessus.

4. Sonde selon la revendication 1, 2 ou 3, dans laquelle le deuxième magnétiseur (12) possède un noyau central magnétisé de façon permanente (40) qui se termine au niveau de ses zones d'extrémité par des pièces polaires (42, 44) respectives, des moyens (52) destinés à supporter élastiquement le premier magnétiseur (26) depuis ledit noyau central (40) et des moyens (58) destinés à dilater radialement lesdits moyens de support élastiques contre la surface interne d'une paroi d'un spécimen en cours d'étude étant prévus.

5. Sonde selon la revendication 2 ou 5, ou selon la revendication 3 ou 4 lorsqu'elle est rattachée à la revendication 2, comportant un sabot (52) dans lequel est monté le premier magnétiseur (26), les moyens de mesure de fuite de flux (36) et les moyens de mesure de réluctance (38), le sabot (52) étant supporté de façon flexible par le deuxième magnétiseur (12) entre les pièces polaires (42, 44) de celui-ci, des moyens élastiques (58) étant prévus pour presser le sabot contre l'intérieur d'une paroi d'un spécimen en cours d'étude, les moyens de mesure de fuite de flux (36) et les moyens de mesure de réluctance (38) étant prévus pour délivrer des signaux à partir desquels des défauts sur l'extérieur d'une telle paroi peuvent être distingués des défauts sur l'intérieur d'une telle paroi.

6. Sonde selon la revendication 2 ou 5, ou selon la revendication 3 ou 4 lorsqu'elle est rattachée à la revendication 2, dans laquelle le deuxième magnétiseur (12) comporte un noyau allongé magnétisé de façon permanente (40) qui se termine aux deux extrémités par des pièces polaires de préhension ferromagnétiques respectives (42, 44), plusieurs sabots disposés radialement (52, 52', 52" et 52"') qui sont supportés de façon flexible autour du noyau (40) du deuxième magnétiseur (12) entre les pièces polaires de préhension (42, 44) étant prévus, chaque sabot comprenant un élément magnétique (26, 26', 26'' et 26'''), un capteur de fuite de flux et un capteur de réluctance, les éléments magnétiques, les capteurs de fuite de flux et les capteurs de réluctance formant de manière collective le premier magnétiseur (12), les moyens de mesure de fuite de flux (36) et les moyens de mesure de réluctance (38) respectivement.

7. Sonde selon l'une quelconque des revendications précédentes, dans laquelle le premier magnétiseur (26) est un aimant permanent.

8. Sonde selon l'une quelconque des revendications précédentes, dans laquelle le deuxième magnétiseur (12) est un aimant permanent.

9. Sonde selon l'une quelconque des revendications précédentes, dans laquelle les moyens de détection (36, 38) sont disposés entre les pôles (18, 20) du deuxième magnétiseur (12).

10. Sonde selon l'une quelconque des revendications précédentes, dans laquelle le champ magnétique dû au deuxième magnétiseur (12) est plus fort que celui dû au premier magnétiseur (26).
